# EUROPÄISCHE PATENTSCHRIFT

(11) **EP 0 953 142 B1**
(45) Veröffentlichungstag und Bekanntmachung des Hinweises auf die Patenterteilung: **24.04.2002**
(21) Anmeldenummer: 98900069.0
(22) Anmeldetag: 13.01.1998
(51) Int. Cl.: G01G 11/00, G01G 23/16

(54) **BANDWAAGE**
CONVEYOR SCALE
BALANCE A COURROIE

(30) Priorität: 17.01.1997 CH 7997
(43) Veröffentlichungstag der Anmeldung: 03.11.1999
(73) Patentinhaber: K-TRON TECHNOLOGIES, INC., Wilmington, DE 19801 (US)
(72) Erfinder: LUDESCHER, Stefan, CH-5702 Niederlenz (CH)
(74) Vertreter: Salgo, Reinhold Caspar, Dr.
(86) Internationale Anmeldenummer: CH9800011
(87) Internationale Veröffentlichungsnummer: WO9831993

(56) Entgegenhaltungen:
- EP-A- 0 413 601
- FR-A- 2 129 807
- GB-A- 358 786
- US-A- 2 997 205

## Beschreibung

Die vorliegende Erfindung bezieht sich auf eine Bandwaage für Schüttgüter mit Nullpunktkontrolle nach dem Oberbegriff des Patentanspruches 1.

Verfahren und Vorrichtungen zur Ueberwachung und Nacheichung des Nullpunktes von Bandwaagen sind mehrere bekannt. Stellvertretend für die grössere Zahl von Druckschriften, die den Stand der Technik abgrenzen, seien genannt WO 91/14927 (D1) und WO 95/29390 (D2). Das Ziel der vorgenannten Erfindungen und auch der vorliegenden ist, die Genauigkeit der Ermittlung des Massenstromes durch eine Bandwaage zu steigern. Dazu wird einerseits - zur Bestimmung des durch das leere Band gegebenen Nullpunktes der Wägung - die Zufuhr des zu bestimmenden Schüttgutes periodisch unterbrochen (D1), anderseits werden zwei, von der Beschickungsstation stromabwärts liegende, Wägestationen vorgesehen. Innerhalb gewisser Toleranzen werden die beiden Wägeresultate zur Mittelbildung herangezogen (D2).

Sowohl in GB 358 786 A als auch in FR 2 129 807 A werden Verfahren respektive Vorrichtungen vorgestellt, mit welchen das Band zweimal gewogen wird, und zwar mit einer ersten Wägevorrichtung auf seiner Oberseite zusammen mit dem darauf aufgebrachten Schüttgut, und mit einer zweiten Wägevorrichtung auf seiner zurücklaufenden Unterseite, wobei in GB 358 786 A rein mechanische Mittel zur Bildung der Differenz der beiden Gewichte vorgesehen sind.

Die Nachteile dieser Verfahren und der entsprechenden Vorrichtungen liegen einmal darin, dass allfälliges auf dem Band haftendes Schüttgut die zweite Wägung auf seiner Unterseite stört. Weiter werden die Wägungsresultate unzutreffend, wenn Schüttgut auf dem zurücklaufenden Teil des Bandes zunächst haftet, unterwegs zwischen Umlenkrolle und der zweiten Wägung aber dann dennoch verloren geht, oder wenn Schüttgut von der oberen Seite des Bandes auf den zurücklaufenden Teil fällt. Ausserdem sind gemäss diesen Offenbarungen weder die Position noch die Geschwindigkeit des Bandes bekannt. Die Geschwindigkeit des Bandes kann darum auch nicht passend, beispielsweise als Funktion des Unterschieds zwischen Soll- und Ist-Wert des Massenflusses, verändert werden, was sowohl die Einhaltung eines gewünschten Massenflusses als auch die Verwendung gespleisster oder sonstwie inhomogener Bänder erschwert oder gar verunmöglicht. Im weiteren kann mit den oben vorgestellten Verfahren oder Vorrichtungen auch ein Schlupf des Bandes weder festgestellt noch kompensiert werden.

In US 2 997 205 wird eine Vorrichtung und ein Verfahren vorgestellt, mit welchen das Band zweimal auf seiner Oberseite gewogen wird, in einer ersten Wägevorrichtungen zuerst ohne, dann in einer zweiten Wägevorrichtungen zusammen mit darauf zusätzlich aufgebrachten Schüttgut. Auch da ist aber die genaue Laufzeit eines bestimmten Punktes des Bandes zwischen den beiden Wägevorrichtungen weder bekannt noch von Bedeutung.

Bei keiner der oben erwähnten Vorrichtungen oder Verfahren ist der genaue Abstand der beiden Wägevorrichtungen, entlang der Laufrichtung des Bandes gemessen, von Bedeutung.

Der periodische Unterbruch der Beschickung gestattet selbstverständlich die Ermittlung des allenfalls sich ändernden Nullpunktes. Dies ist jedoch für viele Anwendungen hinderlich, da die Beschickung einer weiteren Verarbeitungsstation durch das Wägegut nicht ohne weiteres und wiederholentlich unterbrochen werden kann. Zudem bleibt in der Zeit zwischen zwei solchen Unterbrüchen der letztermittelte Nullpunkt gespeichert. Bei problematischen Schüttgütern wie Schokolademasse, Mehl und anderen zum Teil klebrigen Schüttgütern, kann der Nullpunkt verhältnismässig schnell variieren. Das in D2 beschriebene Verfahren trägt dann, wenn sich Rückstände von erwähnten Gütern - allenfalls auch auf der Rückseite des Transportbandes - langsam aufbauen und dort kleben bleiben, nichts zur absoluten Genauigkeit der Wägung bei.

Die Aufgabe, die mit der vorliegenden Erfindung gelöst werden soll, ist die Schaffung einer Bandwaage, mit welcher der Wäge-Nullpunkt kontinuierlich und dauernd ermittelt werden kann und zur Verarbeitung mit der Brutto-Wägung immer aktuell zur Verfügung steht.

Die Lösung der gestellten Aufgabe ist wiedergegeben im kennzeichnenden Teil des Patentanspruches 1 hinsichtlich ihrer wesentlichen Merkmale, in den Patentansprüchen 2 bis 8 hinsichtlich weiterer vorteilhafter Ausbildungen.

Die Erfindung ist anhand der beigefügten Zeichnungen näher beschrieben.

Es zeigen
- Fig. 1: eine schematische Darstellung der erfindungsgemässen Bandwaage,
- Fig. 2: ein Blockschema der elektronischen Ausrüstung.

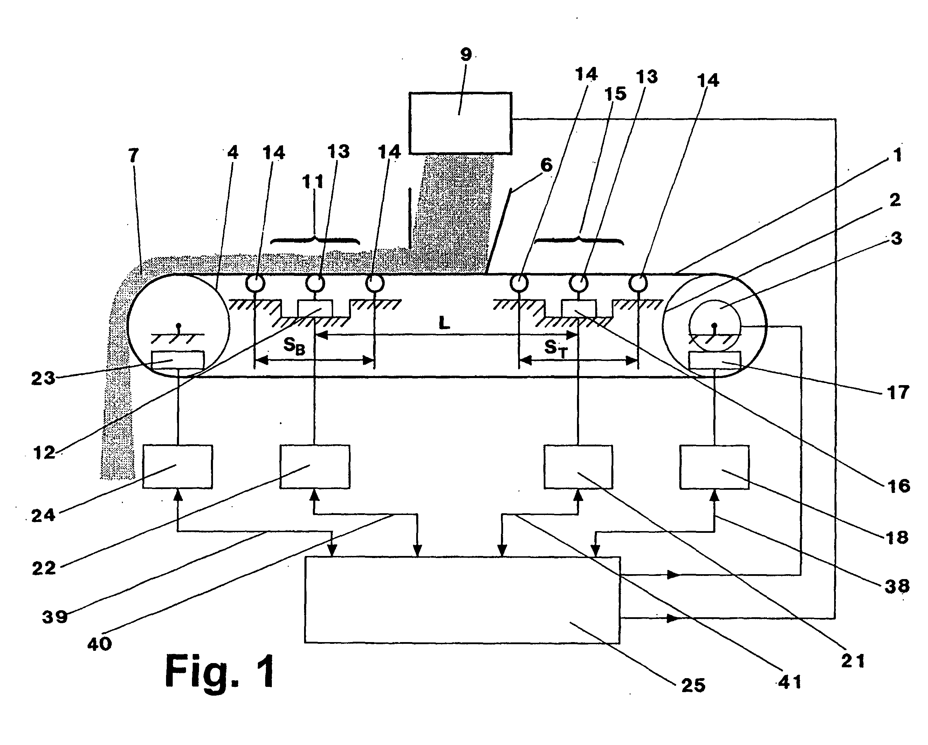

In Fig. 1 ist die erfindungsgemässe Dosier-Bandwaage in ihrem mechanischen und elektrischen Aufbau mehr schematisch dargestellt. Ein Förderband 1 wird über eine Antriebsrolle 2 von einem Elektromotor 3 mit Getriebe angetrieben und läuft über eine Umlenkrolle 4. Die Umlenkrolle 4 ist zugleich in bekannter Weise als Spannrolle ausgebildet. Diese Ausbildung ist ebenfalls an sich bekannt und so geartet, dass damit auch der Geradelauf des Förderbandes 1 bewirkt werden kann. Ferner können die Lagen der Antriebsrolle 2 und der Umlenkrolle 4 vertauscht sein. Ein Einlauftrichter 6 leitet den Massenstrom eines zu dosierenden Schüttgutes 7 auf das Förderband 1. Das Schüttgut 7 wird dem Einlauftrichter 6 in bekannter Art durch beispielsweise einen Schneckenförderer, Vibrator, ein Förderband oder weitere bekannte Fördermittel zugeführt. Diese bekannten und möglichen Fördermittel sind schematisch als Kasten dargestellt und mit dem Bezugszeichen 9 belegt. Ferner kommt auch ein direkter Siloabzug durch das Förderband 1 in Betracht. Bei der letzteren Variante wird die Fördermenge allein durch die Geschwindigkeit des Förderbandes 1 gesteuert; kommt zusätzlich eine Zuführvorrichtung 9 in Betracht, so ist sowohl diese, als auch die Bandgeschwindigkeit gesteuert.

In Laufrichtung des Förderbandes 1 hinter dem Einlauftrichter 6 befindet sich eine Wägevorrichtung 11, bestehend aus einer Kraftmesszelle 12, die die Kraft auf einen über die ganze Breite des Förderbandes 1 sich erstreckenden Stab 13 misst. Die eigentliche Messstrecke, hier mit dem Buchstaben S bezeichnet, in deren Mitte sich der Stab 13 befindet, ist begrenzt durch zwei weitere Stäbe 14. Der Zusammenhang zwischen der durch die Messzelle 12 gemessenen Kraft, der Länge der Messstrecke, der Bandgeschwindigkeit V_{B} und dem Massenstrom m ist bekannt und braucht hier nicht erörtert zu werden. Der so ermittelte Massenstrom m ist allerdings ein Bruttowert, da das Gewicht des Förderbandes 1 dauernd mitgewogen wird. Zudem sind Einflüsse von der Bandspannung vorhanden, da beispielsweise der Stab 12 etwas höher liegt, als die beiden Stäbe 14. Der ermittelte Bruttowert m ist also um einen Tarawert zu bereinigen, der durch die Messung des leeren Förderbandes 1 gegeben ist. Anstatt nun den Strom des Schüttgutes 7 periodisch zu unterbrechen, um den Tarawert zu erhalten, der bis zur nächsten Bestimmung gespeichert bleibt, ist bei der in Fig. 1 gezeigten Vorrichtung eine zweite, im bevorzugten Ausführungsbeispiel zur Wägevorrichtung 11 völlig identische, Wägevorrichtung 15 vorgesehen. Diese liegt in Laufrichtung des Förderbandes 1 vor dem Einlauftrichter 6 und besteht ebenfalls aus zwei die Messstrecke S definierenden Stäben 14 und einem die Wägekraft aufnehmenden Stab 13, der seinerseits eine Kraftmesszelle 16 beaufschlagt. Die von den Kraftmesszellen 12, 16 erzeugten Signale werden in je einem, den Kraftmesszellen 12, 16 nachgeschalteten Auswertegerät 21, 22 zu digitalen Gewichtssignalen aufbereitet und einem Rechner 25 zugeführt.

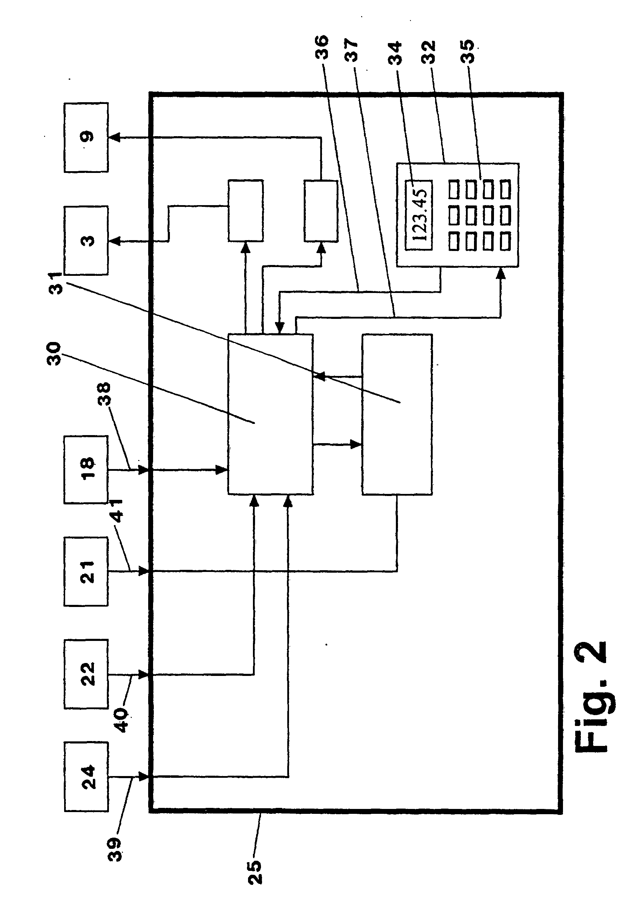

Das Zusammenwirken der zwei Wägevorrichtungen 11 und 15 wird unter Einbezug der weiteren dargestellten Elemente in Fig. 1 zunächst summarisch, anhand der Fig. 2 mehr im Einzelnen erläutert.

Am Motor 3 - oder an dem mit ihm verbundenen, nicht gesondert dargestellten Getriebe - ist ein Inkrementalgeber 17 angebracht, mit dessen Hilfe in einem Zähler 18 ein der Drehgeschwindigkeit der Antriebsrolle 2 entsprechendes digitales Signal erzeugt wird. Zusätzlich kann ein dem Inkrementalgeber 17 entsprechender Inkrementalgeber 23 die Drehgeschwindigkeit der Umlenkrolle 4 messen; in einem mit dem Inkrementalgeber 23 nachgeschalteten zweiten Zähler 24 wird dann dessen Signal in ein der Drehgeschwindigkeit der Umlenkrolle 4 entsprechendes Digitalsignal aufgearbeitet. Sofern das Förderband 1 auf der Antriebsrolle 2 keinen Schlupf aufweist, sind die von den Zählern 17 und 23 erzeugten und an den Rechner 25 abgegebenen Signale gleich gross; eine Differenz der beiden Signale bedeutet also Schlupf des Förderbandes 1; bei diesem Sachverhalt erzeugt der Rechner 25 ein entsprechendes Signal, das beispielsweise zum automatischen Anhalten der Vorrichtung gemäss Fig. 1 verwendet werden kann.

Durch die beschriebenen Massnahmen ist genau bekannt, welche Zeit einerseits ein bestimmter Punkt des Förderbandes 1 für das Zurücklegen der Messstrecke S benötigt, anderseits auch wieviel Zeit verstreicht, bis der gleiche Punkt die Strecke L zurückgelegt hat, wobei mit L der Abstand der beiden in den Mitten der Wägevorrichtungen 11, 15 liegenden Stäbe 13, im bevorzugten Ausführungsbeispiel generell der Abstand homologer Punkte der zwei Wägevorrichtungen 11 und 15, bezeichnet ist. Für den allgemeinen Fall, wo die Wägevorrichtungen 11, 15 nicht identisch ausgelegt sind, ist mit S_{B} die Messstrecke der Wägevorrichtung 11, mit S_{T} jene der Wägevorrichtung 15 bezeichnet.

Ein Wägevorgang jeder der beiden Kraftmesszellen 12, 16 benötigt ein bestimmtes, wenn auch kurzes Zeitintervall, sei dies für eine Mittelbildung, sei dies, wie bei Saitenkraftmesszellen, aus systematischen Gründen. In dem genannten Zeitintervall ist das Förderband 1 bei der Wägevorrichtung 11 um einen bestimmten Weg S_{B}/k_{B} vorgerückt unter der Voraussetzung, dass in der Zeit, in welcher das Förderband 1 den Weg S_{B} zurücklegt, k_{B} Wägungen vorgenommen werden. Die Wägevorrichtung 15 hat die Messstrecke S_{T} und ebenfalls ein bestimmtes, allenfalls unterschiedliches, Zeitintervall für eine Wägung, so dass in der gleichen Zeit, wo die Wägevorrichtung 11 k_{B} Wägungen durchführt, bei der Wägevorrichtung 15 k_{T} Wägungen vorliegen. Zweckmässigerweise ist k_{B} = k_{T}. Wie weiter unten besprochen wird, kann jedoch auch k_{T} = k_{B}/h sein; d.h. die Wägevorrichtung 15 arbeitet mit einer tieferen zeitlichen Auflösung als die Wägevorrichtung 11. Ist ferner S_{B} ≠ S_{T}, so wird für die Berechnung der Tarabelastung durch den Rechner 25 die Messstrecke S_{T} der Wägevorrichtung 15 und die beim Durchfahren dieser Messstrecke durch das Förderband 1 erfolgende Anzahl k_{T}.S_{T}/S_{B} herangezogen. Analog zu dieser Betrachtung erfolgen in der Zeit, in der das Förderband 1 den Weg L zurücklegt, j Wägungen der Wägevorrichtung 11.

Fig. 2 zeigt in Blockschema-Art, wie die verschiedenen genannten Digital-Signale verarbeitet werden. Mit der Ziffer 25 ist der in Fig. 1 als Kasten dargestellte Rechner bezeichnet. Er enthält eine zentrale Rechnereinheit 30, welche sämtliche arithmetischen und logischen Operationen vornimmt und auch das Steuerprogramm gespeichert enthält. Durch Datenleitungen 36, 37 ist eine Eingabe-/Ausgabeeinheit 32 mit der zentralen Rechnereinheit 30 verbunden, über welche die Steuergrössen wie Bandgeschwindigkeit, Massenstrom, Ein- und Ausschaltbefehle und - falls im Programm vorgesehen - Grenzwerte (beispielsweise für Sollwertabweichung und maximale Tarawerte) eingegeben werden können. Die Eingabe erfolgt bei der Eingabe-/Ausgabeeinheit 32 über eine schematisch dargestellte Tastatur 35; Ausgabewerte über numerische Grössen und Betriebszustände werden auf einem Bildschirm 34 dargestellt. Die Eingabewerte über Motordrehzahl (18) Bandlaufgeschwindikeit (24) und Bruttowägung (22) werden direkt über bidirektionale Datenleitungen 38, 39, 40, in die zentrale Rechnereinheit 30 eingespeist; bidirektional deshalb, weil die zentrale Rechnereinheit 30 für die mit 18 bis 24 bezeichneten Elemente mindestens den Rechnertakt abgibt. Über eine weitere bidirektionale Datenleitung 41 ist das Auswertegerät der Tarawägung, also jenes der Wägevorrichtung 15 mit einem Schieberegister 31 verbunden. Dieses enthält beispielsweise j Zählstufen, deren Inhalt mit jedem Takt um eine Stufe weitergeschoben wird unter der sinnvollen Voraussetzung, dass die Wägevorrichtungen 11, 15 ihre Wägungen im gleichen Takt ausführen. Das aus der letzten Stufe mit der Nummer j ausgeschobene Resultat wird mit dem Resultat der Bruttowägung der Wägevorrichtung 11 in der zentralen Rechnereinheit 30 zum Nettoresultat verarbeitet; das dafür in die Zählstufe mit der Nummer 1 eingelesene ist das aktuelle der Wägevorrichtung 15. Mit im Erfindungsgedanken enthalten ist es, die Anzahl der Zählstufen j um einen Faktor h zu reduzieren unter gleichzeitiger Reduktion des Schiebetaktes um den gleichen Faktor h. Dies hat zur Folge, dass ein bestimmtes Tararesultat der Wägevorrichtung 15 für h Bruttowägungen verwendet wird. Dies kann angezeigt sein, wenn die örtliche und zeitliche Schwankung des Tararesultates klein ist.

Anstelle eines Schieberegisters 31 ist auch die Verwendung eines j numerierte Speicherplätze enthaltenden adressierbaren RAM ebenfalls im Sinne der Erfindung, wobei die Reduktion auf j/h Speicherplätze - wie vorgenannt - ebenfalls im Gedanken mitenthalten ist. Dabei wird bei jeder Wägung, Brutto wie Tara, der entsprechende Speicherplatz adressiert und gleichzeitig der Adresswähler um eine Nummer erhöht.

Die Bandlaufgeschwindigkeit (Motor 3) und die allenfalls den Strom des Schüttgutes 7 steuernde Zuführvorrichtung 8 können vom Ablaufprogramm in der zentralen Rechnereinheit 30 gesteuert werden; Verfahren und Vorrichtungen hiezu sind an sich bekannt; ebenso die Verarbeitung der Daten aus den mit 17 bis 24 bezeichneten Vorrichtungen.

Der Vorteil des hier beschriebenen Einsatzes einer den Tarawert laufend ermittelnden zweiten Wägevorrichtung 15 besteht darin, dass zu jeder Bruttowägung eine Tarawägung zur Verfügung steht, die aktuell bestimmt wurde, und sowohl periodische Taraschwankungen, wie Inhomogenität des Förderbandes 1, als auch unregelmässige, wie Verschmutzung des Bandes (einschliesslich des Abbaus von Verkrustungen) gleichermassen aktuell erfasst und berücksichtigt. Einerseits entfällt damit der periodische Leerlauf des Förderbandes 1, anderseits wird nicht mit einem mittleren Tarawert, sondern mit einer Vielzahl von individuell und aktuell bestimmten gearbeitet.

Die erfinderische Massnahme steigert also die Verfügbarkeit der Dosiervorrichtung, von der die Bandwaage den entscheidenden Teil bildet.

Ein weiterer Vorteil der erfindungsgemässen Bandwaage liegt darin, dass gespleisste Förderbänder verwendet werden können anstelle von rundgewobenen oder sonstwie homogen hergestellten. Gespleisste Förderbänder weisen an der Spleissstelle eine Masseninhomogenität auf, die bei gespeicherten Tarawerten nicht berücksichtigt werden kann.

Mit der erfindungsgemässen Vorrichtung werden Masseninhomogenitäten - ungeachtet ihrer Herkunft - wirkungsvoll subtrahiert und damit auch die Auflösung und Genauigkeit der Bandwaage gesteigert bei gleichzeitiger Senkung der Kosten für das Förderband als Verschleissteil.

## Patentansprüche

1. Bandwaage für Schüttgut (7) mit Nullpunktkorrektur mit
- einer von einem Motor (3) angetriebenen Antriebsrolle (1), einer Umlenkrolle (4) und einem darum umlaufenden Förderband (1),
- einem Einlauftrichter (6) für das zu wägende Schüttgut (7),
- einer ersten, dem Einlauftrichter (6) nachgeschalteten, Wägevorrichtung (11) mit einer ersten Kraftmesszelle (12) mit Auswertegerät (22), welche somit die Bruttobelastung durch das volle Förderband (1) misst,
- einer zweiten Wägevorrichtung (15) mit einer zweiten Kraftmesszelle (16) mit Auswertegerät (21), welche in Laufrichtung des Förderbandes (1) dem Einlauftrichter (6) vorgeschaltet ist und somit die Tarabelastung durch das leere Förderband (1) ermittelt,
- mindestens einer Vorrichtung zur Ermittlung der Laufgeschwindigkeit V_{B} des Förderbandes (1), und
- mit einem Rechner (25) mit zentraler Recheneinheit (30) und Rechen- und Steuerprogramm für die Auswertung aller anfallenden und zu ermittelnden Grössen und einer Eingabe-/Ausgabevorrichtung (32) und Datenleitungen zu allen Messstellen,
**dadurch gekennzeichnet, dass**
- der Abstand (L) zwischen den beiden Kraftmesszellen (12, 16) genau bekannt ist,
- im Rechner (25) Mittel vorhanden sind, um aus den Wägeresultaten der ersten Wägevorrichtung (11) und jenen der zweiten Wägevorrichtung (15), welche ein Zeitintervall L/V_{B} früher gemessen worden sind, die aktuelle Netto-Belastung des Förderbandes (1) durch das Schüttgut (7) zu ermitteln.

2. Bandwaage nach Patentanspruch 1, **dadurch gekennzeichnet, dass**
- die beiden Wägevorrichtungen (11, 15) so aufgebaut sind, dass sie zwei quer zur Laufrichtung des Förderbandes (1) über dessen Breite sich erstreckende Stäbe (14) aufweisen, die den gegenseitigen Abstand S_{B} für die erste Wägevorrichtung (11) und den gegenseitigen Abstand für S_{T} die zweite Wägevorrichtung (15) aufweisen, wobei S_{B} und S_{T} die Messstrecken der beiden Wägevorrichtungen (11, 15) darstellen und dass jeweils in der Mitte der Messstrecke ein weiterer, gleichartiger Stab (13) parallel zu den genannten Stäben (14) vorhanden ist, der je eine Kraftmesszelle (12, 16) beaufschlagt.

3. Bandwaage nach Patentanspruch 2, **dadurch gekennzeichnet, dass** die beiden Wägevorrichtungen (11, 15) im wesentlichen identisch aufgebaut sind, so dass gilt S_{B} = S_{T} = S.

4. Bandwaage nach Patentanspruch 1, **dadurch gekennzeichnet, dass**
- die im Rechner (25) vorhandenen Mittel um die aktuelle Netto-Belastung des Förderbandes (1) zu ermitteln darin bestehen, dass ein Schieberegister (31) vorhanden ist mit j/h Zählstufen, wo j und h ganze Zahlen sind und die Zahl j der Anzahl Wägungen entspricht, die von der ersten Wägevorrichtung (11) in der Zeit vorgenommen werden, in der das Förderband (1) die Strecke L zurücklegt,
- jedes Wägeresultat der zweiten Wägevorrichtung (15) in das Schieberegister (31) eingelesen wird, und die darin befindlichen j/h Wägeresultate der zweiten Wägevorrichtung (15) um eine Zählstufe weitergeschoben werden,
- das aus der letzten Zählstufe des Schieberegisters (31) herausgelesene Wägeresultat der zweiten Wägevorrichtung (15) als Tarawert für den von der ersten Wägevorrichtung (11) ermittelten Bruttowert zur Verfügung steht, wobei die Ermittlung des Nettowertes in der zentralen Recheneinheit (30) vorgenommen wird.

5. Bandwaage nach Patentanspruch 4, **dadurch gekennzeichnet, dass** die beiden Wägevorrichtungen (11, 15) im wesentlichen identisch aufgebaut sind und h = 1 und die beiden Wägevorrichtungen (11, 15) im gleichen Takt arbeiten.

6. Bandwaage nach Patentanspruch 1, **dadurch gekennzeichnet, dass**
- die im Rechner (25) vorhandenen Mittel um die Netto-Belastung des Förderbandes (1) zu ermitteln darin bestehen, dass ein adressierbares RAM mit j/h Speicherplätzen vorhanden ist, wo j und h ganze Zahlen sind und die Zahl j der Anzahl Wägungen entspricht, die von der ersten Wägevorrichtung (11) in der Zeit vorgenommen werden, in der das Förderband (1) die Strecke L zurücklegt,
- jedes Wägeresultat der zweiten Wägevorrichtung (15) in das RAM eingelesen wird, wobei die Adresse jeweils um den Wert 1 erhöht wird,
- das aus dem Speicherplatz mit der Adresse j/h herausgelesene Wägeresultat der zweiten Wägevorrichtung (15) als Tarawert für den von der ersten Wägevorrichtung (11) ermittelten Bruttowert zur Verfügung steht, wobei die Ermittlung des Nettowertes in der zentralen Recheneinheit 30 vorgenommen wird.

7. Bandwaage nach Patentanspruch 6, **dadurch gekennzeichnet, dass** die beiden Wägevorrichtungen (11, 15) im wesentlichen identisch aufgebaut sind und h = 1 und die beiden Wägevorrichtungen (11, 15) im gleichen Takt arbeiten.

8. Bandwaage nach Patentanspruch 1, **dadurch gekennzeichnet, dass** der Rechner (25) eine mit der zentralen Recheneinheit verbundene Eingabe-/Ausgabeeinheit (32) aufweist mit Tastatur (35) zur Eingabe betriebsnotwendiger Parameter und Steuergrössen und einem Bildschirm (34) zur Darstellung von Betriebsdaten und -zuständen.

## Claims

1. A continuous weighing meter for bulk materials (7) with zero point correction with
- a drive roller (2) driven by a motor (3), a guide roller (4) and a conveyor belt (1) running around them,
- an input funnel (6) for the bulk material (7) to be weighed,
- a first weighing arrangement (11) positioned after the input funnel (6) with a first force measuring cell (12) with an evaluation equipment (22), which thereby measures the gross loading by the full conveyor belt (1),
- a second weighing arrangement (15) with a second force measuring cell (16) with an evaluation equipment (21), which is positioned before the input funnel (6) in the running direction of the conveyor belt (1) and thus determines the tare loading due to the empty conveyor belt (1),
- at least one device for determining the running speed V_{B} of the conveyor belt (1), and
- a computer (25) with a central processing unit (30) and computing and control programs for the evaluation of all values arising to be determined and an input/output unit (32) and data lines to all measurement positions,
**characterised in that**
- the separation (L) between the two force measuring cells (12, 16) is exactly known,
- means are present in the computer (25) to determine the current net loading of the conveyor belt (1) by the bulk material (7) from the weighing results of the first weighing arrangement (11) and that of the second weighing arrangement (15), which was measured a time interval L/V_{B} earlier.

2. A continuous weighing meter according to Claim 1, **characterised in that**
- the two weighing arrangements (11, 15) are so constructed that they have two rods (14) at right angles to the direction of movement of the conveyor belt (1), extending across its width, which exhibit the mutual separation S_{B} for the first weighing arrangement (11) and the mutual separation S_{T} for the second weighing arrangement (15), whereby S_{B} and S_{T} represent the measurement distances of the two weighing arrangements (11, 15) and that a further similar rod (13), parallel to the aforementioned rods (14) is present in each case, each of which impacts on a force measuring cell (12, 16).

3. A continuous weighing meter according to Claim 2, **characterised in that** the two weighing devices (11, 15) are constructed essentially identically, so that S_{B} = S_{T} = S.

4. A continuous weighing meter according to Claim 1, **characterised in that**
- the means available in the computer (25) to determine the actual net loading of the conveyor belt (1) comprise **in that** a shift register (31) is present with j/h counting stages, where j and h are whole numbers and the count j corresponds to the number of weighings which are undertaken by the first weighing arrangement (11) in the time that the conveyor belt (1) covers the distance L,
- each weighing result of the second weighing arrangement (15) is read into the shift register (31), and the j/h weighing result of the second weighing arrangement (15) already in there is shifted further by a counting stage.
- the weighing result read out from the last counting stage of the shift register (31) from the second weighing arrangement (15) is available as tare value for the gross value determined from the first weighing arrangement (11), whereby the determination of the net value is undertaken in the central processing unit (30).

5. A continuous weighing meter according to Claim 4, **characterised in that** the two weighing arrangements (11, 15) are essentially constructed identically and h = 1 and the two weighing arrangements operate with the same timing.

6. A continuous weighing meter according to Claim 1, **characterised in that**
- the means available in the computer (25) for determining the net loading of the conveyor belt (1) comprise **in that** an addressable RAM with j/h store locations is present, where j and h are whole numbers and the count j of the number of weighings corresponds to those undertaken by the first weighing arrangement (11) in the time during which the conveyor belt (1) passes through the distance L,
- each weighing result from the second weighing arrangement (15) is read into the RAM, whereby the address is increased by the value of 1 in each case,
- the weighing result read out from the store location with the address j/h from the second weighing arrangement (15) is available as tare value for the gross value determined from the first weighing arrangement (11), whereby the determination of the net value is undertaken in the central processing unit (30).

7. A continuous weighing meter according to Claim 6, **characterised in that** the two weighing arrangements (11, 15) are essentially constructed identically and h = 1 and the two weighing arrangements operate with the same timing.

8. A continuous weighing meter according to Claim 1, **characterised in that** the computer (25) has an input/output unit (32) connected to the central processing unit (30) with a keyboard (35) for the input of operationally required parameters and control values and a visual display unit (34) for the representation of operational data and conditions.

## Revendications

1. Bascule à courroie pour un produit en vrac (7) avec une correction du point zéro, comprenant :
- une poulie motrice (2) entraînée par un moteur (3), une poulie de renvoi (4) et une courroie de transport (1) qui tourne sur celles-ci,
- une trémie d'entrée (6) pour le produit en vrac à peser (7),
- un premier dispositif de pesage (11) monté en aval de la trémie d'entrée (6) et comportant une première cellule dynamométrique (12) qui est pourvue d'un appareil d'évaluation (22) et qui mesure la charge brute due à la courroie de transport (1) pleine,
- un second dispositif de pesage (15) qui comporte une cellule dynamométrique (16) pourvue d'un appareil d'évaluation (21), qui est monté en amont de la trémie d'entrée (6), dans le sens de défilement de la courroie de transport (1), et qui détermine ainsi la charge de tare due à la courroie de transport (1) vide,
- au moins un dispositif pour déterminer la vitesse de défilement V_{B} de la courroie de transport (1), et
- un calculateur (25) comprenant une unité de calcul centrale (30) et un programme de calcul et de commande pour évaluer toutes les grandeurs apparaissant et à déterminer, et un dispositif d'entrée/sortie (32) et des lignes de données menant à tous les points de mesure,
**caractérisée en ce que**
- l'écartement (L) entre les deux cellules dynamométriques (12, 16) est connu avec précision,
- dans le calculateur (25), il est prévu des moyens pour déterminer, à partir des résultats de pesage du premier dispositif de pesage (11) et de ceux du second dispositif de pesage (15), qui ont été mesurés pendant un laps de temps L/V_{B} précédent, la charge nette actuelle de la courroie de transport (1) due au produit en vrac (7).

2. Bascule à courroie selon la revendication 1, **caractérisée en ce que**
- les deux dispositifs de pesage (11, 15) sont construits de telle sorte qu'ils comportent deux barres (14) qui s'étendent transversalement au sens de défilement de la courroie de transport (1), sur la largeur de celle-ci, et qui présentent l'écartement mutuel S_{B} pour le premier dispositif de pesage (11) et l'écartement mutuel S_{T} pour le second dispositif de pesage (15), S_{B} et S_{T} représentant les distances de mesure des deux dispositifs de pesage (11, 15), et **en ce qu'**il est prévu, au milieu de chaque distance de mesure, une autre barre (13) du même type qui est parallèle aux barres (14) et qui sollicite une cellule dynamométrique respective (12, 16).

3. Bascule à courroie selon la revendication 2, **caractérisée en ce que** les deux dispositifs de pesage (11, 15) ont des constructions globalement identiques, de sorte que S_{B} = S_{T} = S.

4. Bascule à courroie selon la revendication 1, **caractérisée en ce que**
- les moyens prévus dans le calculateur (25) pour déterminer la charge nette actuelle de la courroie de transport (1) consistent à prévoir un registre à décalage (31) avec j/h niveaux de comptage, j et h étant des nombres entiers et le nombre j correspondant au nombre de pesages qui sont effectués par le premier dispositif de pesage (11) pendant la période où la courroie de transport (1) parcourt la distance L,
- chaque résultat de pesage du second dispositif de pesage (15) est entré dans le registre à décalage (31) et les j/h résultats de pesage du second dispositif de pesage (15) qui se trouvent dans ce registre sont décalés d'un niveau de comptage,
- le résultat de pesage du second dispositif de pesage (15) qui est sorti du dernier niveau de comptage du registre à décalage (31) est disponible comme valeur de tare pour la valeur brute déterminée par le premier dispositif de pesage (11), la détermination de la valeur nette étant effectuée dans l'unité de calcul centrale (30).

5. Bascule à courroie selon la revendication 4, **caractérisée en ce que** les deux dispositifs de pesage (11, 15) ont des construction globalement identiques et h = 1 et les deux dispositifs de pesage (11, 15) fonctionnent au même rythme.

6. Bascule à courroie selon la revendication 1, **caractérisée en ce que**
- les moyens prévus dans le calculateur (25) pour déterminer la charge nette de la courroie de transport (1) consistent à prévoir une RAM adressable avec j/h emplacements de mémoire, j et h étant des nombres entiers et le nombre j correspondant au nombre de pesages qui sont effectués par le premier dispositif de pesage (11) pendant la période où la courroie de transport (1) parcourt la distance L,
- chaque résultat de pesage du second dispositif de pesage (15) est entré dans la RAM, l'adresse étant augmentée à chaque fois de la valeur 1,
- le résultat de pesage du second dispositif de pesage (15) qui est sorti de l'emplacement de mémoire portant l'adresse j/h est disponible comme valeur de tare pour la valeur- brute déterminée par le premier dispositif de pesage (11), la détermination de la valeur nette étant effectuée dans l'unité de calcul centrale (30).

7. Bascule à courroie selon la revendication 6, **caractérisée en ce que** les deux dispositifs de pesage (11, 15) ont des constructions globalement identiques et h = 1 et les deux dispositifs de pesage (11, 15) fonctionnent au même rythme.

8. Bascule à courroie selon la revendication 1, **caractérisée en ce que** le calculateur (25) comporte une unité d'entrée/sortie (32) qui est reliée à l'unité de calcul centrale et qui est pourvue d'un clavier (35) pour entrer des paramètres et des grandeurs de commande nécessaires au fonctionnement, et d'un écran (34) pour visualiser les données et états de fonctionnement.
